# EUROPÄISCHE PATENTSCHRIFT

(11) **EP 2 358 847 B1**
(45) Veröffentlichungstag und Bekanntmachung des Hinweises auf die Patenterteilung: **02.06.2021**
(21) Anmeldenummer: 09799493.3
(22) Anmeldetag: 02.11.2009
(51) Int. Cl.: C10J 3/32, B01J 8/10

(54) **VORRICHTUNG IN FORM EINES BEWEGT-BETT-VERGASERS UND VERFAHREN ZUM BETREIBEN EINES SOLCHEN IN EINER ANORDNUNG ZUR THERMISCHEN ZERSETZUNG VON ABPRODUKTEN UND ABFALLSTOFFEN**
APPARATUS IN THE FORM OF A MOVING BED CARBURETOR AND METHOD FOR OPERATING THE SAME IN AN ARRANGEMENT FOR THE THERMAL DECOMPOSITION OF WASTE PRODUCTS AND WASTE MATERIALS
DISPOSITIF EN FORME DE GAZÉIFICATEUR À LIT MOBILE ET PROCÉDÉ POUR FAIRE FONCTIONNER CELUI-CI DANS UN SYSTÈME DE DÉCOMPOSITION THERMIQUE DE RÉSIDUS ET DE DÉCHETS

(30) Priorität: 20.11.2008 DE 102008058602
(43) Veröffentlichungstag der Anmeldung: 24.08.2011
(73) Patentinhaber: HS TechTransfer UG (Haftungsbeschrängt)& Co.KG, 07743 Jena (DE)
(72) Erfinder: STREITENBERGER, Hartwig, 07751 Golmsdorf (DE)
(74) Vertreter: Donath, Dirk
(86) Internationale Anmeldenummer: PCT/DE2009/001546
(87) Internationale Veröffentlichungsnummer: WO 2010/057458

(56) Entgegenhaltungen:
- EP-A2- 0 103 065
- EP-A2- 0 309 387
- DE-A1- 19 536 920
- DE-C1- 4 417 082

## Beschreibung

Die Erfindung betrifft einen Bewegt-Bett-Vergaser und ein Verfahren zum Betreiben eines solchen in einer Anordnung zur thermischen Zersetzung von Abprodukten und Abfallstoffen gemäß der Gattung der Patentansprüche.

Die Erfindung bezieht sich auf die Gebiete des Maschinen- und Anlagenbaus, der Energieumwandlung sowie der Abfallverwertung und ist anwendbar in einer Anordnung zur energetischen Umwandlung von kohlenstoffhaltigen Abprodukten, insbesondere von bereits teilweise zersetzten Abprodukten, die nach einem Ent-und/oder Vergasungsprozess (Pyrolyse) anfallen.

Bei der Verarbeitung von Abfällen im Recyclingprozess verbleiben selektive, meist hochkalorische Reststoffe unterschiedlicher Menge, Konzentration und Art, Papier, Kunststoffe, Plastikstücke, Folien, Holzrückstände, Metalle und anderes mehr als nicht verwertbare Reststoffe.
Diese Reststoffe enthalten je nach Produktionsprozess inerte Feststoffanteile und Wasser, welche durch entsprechende Aufbereitung prozessspezifisch zu entfernen und/oder zu reduzieren sind.

Es sind bereits verschiedene Verfahren und Vorrichtungen bekannt, welche die Aufbereitung und / oder Verbrennung und / oder Vergasung von Abfällen und Reststoffen offenbaren.

Aus EP 0 609 802 A1 ist bspw. ein Verfahren und eine Vorrichtung zur kontinuierlichen Entgasung und /oder Vergasung eines festen Brennstoffes oder Abfallstoffes bekannt.
Diese Vorrichtung besteht aus einem schachtartigen Reaktor, in dem die Beschickung, das gasförmige Vergasungsmittel und der erzeugte gasförmige Brennstoff im Gleichstrom absteigend geführt werden. Das Vergasungsmittel wird in einem in der Mantelpartie befindlichen schraubenförmigen Gegenstrom-Wärmetauscher vom gasförmigen Brennstoff vorgewärmt. Dieses vorgewärmte Vergasungsmittel wird in schraubenlinienförmigen oder wellenförmigen Kanälen im keramischen Herdkörper des Reaktors und in einem als Herdabschluss dienenden beweglichen oder festen, in die untere Partie der Beschickung hineinragenden kegel- oder paraboloidförmigen Zentralkörper weiter aufgeheizt. Der Rost wird durch einen Vollkegel oder einen hohlkegelförmigen Ringkörper darstellendes, drehbares, vertikal verschiebbares Gegenstück gebildet, das gegenüber der unteren Herdpartie einen einstellbaren ringförmigen Durchlass zum Abzug des erzeugten gasförmigen Brennstoffs und zum Austrag der festen oder flüssigen Reaktionsprodukte in Form von Asche, Schlacke, Destillationsrückstände offen lässt.

Nachteilig bei dieser technischen Lösung ist, dass die Entgasung und / oder Vergasung der festen Brennstoffe oder Abfallstoffe nicht vollständig erfolgt.

DE 199 37 521 A1 offenbart ein Verfahren und eine Vorrichtung insbesondere für die Bearbeitung von bereits teilweise zersetzten Abprodukten.
Diese Vorrichtung besteht aus einem schachtartigen, im unteren Teil trichterförmigen Reaktor, in dem die Beschickung der Kohlenstoffteilchen tangential und die Luft als Vergasungsmittel axial eingebracht werden und aufsteigend mittels thermochemischer Reaktion zu Synthesegas umgewandelt wird. Der kegelstumpfförmige Bodenteil hat weiterhin einen seitlichen Ringspalt, über die die Luft axial in den Reaktorraum eintreten kann und sich mit dem Kohlenstoff-Gasgemisch vermischen kann. Dieses Gasgemisch reißt dabei die Kohlenstoffteilchen aus dem Feststoffbett nach außen aufsteigend mit und wird im Reaktorraum bei bis zu 1.200°C energetisch zu Synthesegas umgewandelt. Im oberen Drittel des Behälters fällt die Strömung nach innen und beruhigt sich, so dass die noch nicht thermisch zersetzten Kohlenstoffteile und die Ascheanteile wieder nach unten fallen. Dort treffen sie auf einen im Zentrum angeordneten Auffangtrichter, der sich bis zum unteren Bereich durchzieht und von einem Schneckenförderer entsorgt wird.

Nachteilig bei dieser technischen Lösung ist, dass die Entgasung und / oder Vergasung der festen Stoffe nicht vollständig erfolgt und die Stabilität des thermischen Prozesses durch das Gegenstromverfahren und daraus folgende Ablagerungen im Zentrum nicht ausreichend gesichert werden kann.

Die Aufgabe der Erfindung besteht darin, die Nachteile des Standes der Technik zu vermeiden und einen Vergaser (Bewegt-Bett-Vergaser) und ein Verfahren zum Betreiben eines solchen in einer Anordnung zur thermischen Zersetzung von Abprodukten und Abfallstoffen anzugeben, die nach der Entgasung und / oder Vergasung der Abprodukte und Abfallstoffe die verbleibenden Restprodukte weiter und möglichst vollständig umsetzt bzw. verwertet.

Erfindungsgemäß wird diese Aufgabe durch die kennzeichnenden Merkmale des 1. sowie des 8. Patentanspruchs gelöst. Weitere günstige Ausgestaltungsmöglichkeiten der Erfindung sind in den nachgeordneten Patentansprüchen angegeben.

Das Wesen der Erfindung besteht darin, dass es durch den erfindungsgemäßen Bewegt-Bett-Vergaser und durch das erfindungsgemäße Verfahren zum Betreiben eines solchen in einer Anordnung zur thermischen Zersetzung von Abprodukten und Abfallstoffen möglich ist, Abprodukte sowie Abfallstoffe und insbesondere die noch nicht vollständig zersetzten Abfallstoffe aus Ent- oder Vergasungsprozessen weiter und möglichst vollständig umzusetzen, so dass eine Weitergabe an die Umwelt und / oder Deponien im wesentlichen ohne besondere Maßnahmen und möglichst schadstoffrei erfolgen kann.

Der erfindungsgemäße Vergaser (auch als Bewegt-Bett-Vergaser bezeichnet) umfasst einen Vergaserraum und einen Vergaserfuß, wobei der Vergaserraum von einem Vergasermantel umgeben ist sowie einen Synthesegasausgang an seinem einen, verschlossenen Ende aufweist und über sein zweites, offenes Ende über den Vergasermantel mit dem Vergaserfuß in Verbindung steht.

Gemäß der Erfindung ist im Vergaserraum ein Vergaserdom in der Art angeordnet, dass zwischen dem Vergaserdom und dem Vergasermantel und / oder dem Vergasertopf ein Spalt generiert ist.
Der Vergaserfuß ist dabei in seinem Innenraum als ein Vergasertopf ausgebildet ist, in den eine Eintragsvorrichtung sowie mindestens eine Zuführung hineinführen, und der einen, mit Ausnehmungen versehenen Boden gegenüber dem Vergaserraum aufweist, wobei der Boden in einen Zentralschacht mündet.

Der Vergasertopf ist vorteilhaft mit Rührerwerkzeugen ausgestattet, die über eine Rührerwelle im Vergasertopf drehbar gelagert sind. Wesentlich dabei ist, dass die Rührerwelle von einer Fördereinrichtung umgeben ist, die als eine Art Überlauf für den ggf. überfüllten Vergasertopf dient.

Der Vergasertopf umschließt vorteilhaft zur Temperaturaufrechterhaltung mit dem Vergasermantel einen Isolationsraum, durch den die Eintragsvorrichtung, die Zuführung, der Zentralschacht und die Rührerwelle (mit umgebender Fördereinrichtung) hindurch geführt sind.
Der Vergaserfußmantel haltert dabei diese Elemente des Vergasers.

Günstiger Weise sind der Vergaserraum (A) und der Vergaserfuß (B) gasdicht miteinander verbunden, so dass keine Gase aus dem Vergaser unkontrolliert austreten können.

Von Vorteil ist auch, wenn der Vergaserdom zentrisch in dem Vergaserraum angeordnet ist. Dadurch kann eine besonders effektive Reflexion der Wärmestrahlung im Vergaser erfolgen.
Besonders vorteilhaft ist der Vergaserdom dabei haubenförmig (kegelstumpfartiger Querschnitt) ausgestaltet

Im Rahmen der Erfindung liegt auch, dass der Ringspalt segmentiert sein kann.

Der Zentralschacht geht bei dem erfindungsgemäßen Vergaser in einen Austragsschacht über, wobei durch eine anschließende Austragsvorrichtung ein Abführen von Asche und Schlacke aus dem Vergaser bei dessen Betrieb ermöglicht wird.

Der Vergasertopf kann in seinem Querschnitt eine runde oder ovale Grundform (ggf. mit kantigen Bereichen, die durch eine wirtschaftliche Herstellung bedingt sein können) aufweisen, wobei erfindungswesentlich ist, dass der Boden des Vergasertopfs mit Ausnehmungen versehen ist (die bspw. siebförmig angeordnete Löcher sein können), über die im Betriebszustand des Vergasers Asche und Schlacke aus dem Vergasertopf in den Zentralschacht mit Abführungsschacht gelangen kann.

Bei dem erfindungsgemäßen Verfahren wird der zuvor beschriebene Bewegt-Bett-Vergaser in einer an sich bekannten Anordnung zur thermischen Zersetzung von Abprodukten und Abfallstoffen betrieben, wobei der Vergasertopf über die Eintragungsvorrichtung mit Abprodukten oder Abfallstoffen befüllt wird, die vermittels der Rührerwerkzeuge gerühert und über die Ausnehmungen des Bodens mit Vergasungsmittel begast werden, so dass im Betriebszustand bei der erforderlichen Temperatur eine Vergasung der Abprodukte oder Abfallstoffe in dem Vergaserfuß und dem Vergaserraum erfolgt.
Die Vergasungsprodukte gelangen dabei durch den Spalt (der vorteilhaft als Ringspalt ausgebildet ist) in den Vergaserraum und werden von dort über den Synthesegasausgang abgeleitet, wobei die bei der Vergasung gebildete Asche und Schlacke durch die Ausnehmungen des Bodens über den Zentralschacht und den Austragsschacht vermittels der Austragsvorrichtung abgeführt werden.

Wesentlich beim kontinuierlichen Betreiben des Bewegt-Bett-Vergasers ist, dass durch die erfindungsgemäß gestaltete Fördereinrichtung (Uberlauf) ein Uberfüllen des Vergasertopfes mit Abprodukte oder Abfallstoffe verhindert wird, in dem die überschüssigen Anteile über diese Fördereinrichtung entfernt werden.

Während der Durchführung des Verfahrens ist es von Vorteil, dass der erfindungsgemäße Vergaserdom der Wärmerückführung durch Wärmereflexion dient. Auf diese Art und weise kann die Wärmeenergie besonders effektiv und wirtschaftlich im erfindungsgemäßen Verfahren des Betreibens des Vergasers genutzt werden.

Die Erfindung wird nachstehend an Hand der schematischen Zeichnungen und dem Ausführungsbeispiel näher erläutert, ohne auf diese beschränkt zu werden. Es zeigen:
- Fig. 1:: eine schematische 3D-Darstellung einer Ausführungsform eines erfindungsgemäßen Bewegt-Bett-Vergasers,

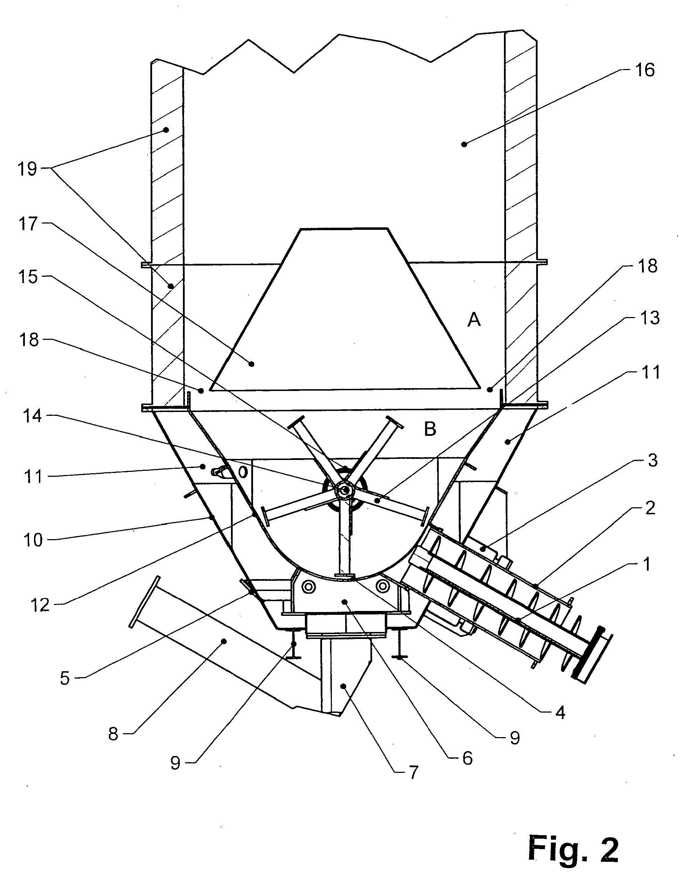

- Fig. 2:: eine schematische Schnittdarstellung eines Ausschnitts des Bewegt-Bett-Vergasers gemäß Fig. 1 und
- Fig. 3: eine schematische Übersichtsdarstellung einer Anordnung zur thermischen Zersetzung von Abprodukten und Abfallstoffen mit einer möglichen Einbauform des Bewegt-Bett-Vergasers gemäß Fig. 1 diese Anordnung.

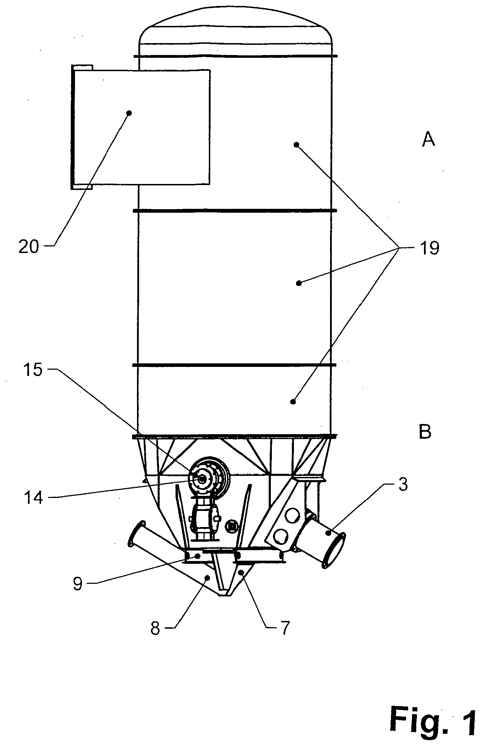

Der in Fig. 1 dargestellte Vergaser gliedert sich in einen Vergaserfuß (B) und einen darüber liegenden Vergaserraum (A). Der Vergaser wird im Betriebszustand von unten nach oben durchströmt.
Die festen, staubförmigen und gasförmigen Abbauprodukte, bspw. aus einem Pyrolyseprozess stammend, werden im Betriebszustand des Vergasers seitlich, mittels einer Eintragsvorrichtung (1) in den Vergasertopf (12) eingebracht.
Die Eintragsvorrichtung (1), vorzugsweise als Schnecke ausgeführt, läuft in einem Führungsrohr (2).
Das Führungsrohr (2) der Eintragsvorrichtung (1) ist mittels eines Stutzens (3) mit dem Vergaserfußmantel (10) verbunden und endet am Vergasertopf (12).

Der Vergasertopf (12) ist Teil des Vergaserfußes (B) und wird vom Vergaserfußmantel (10) umgeben.
Zwischen dem Vergasertopf (12) und dem Vergaserfußmantel (10) befindet sich der Isolationsraum (11), welcher mit passenden Isolationsmaterialien versehen ist.
Im Vergasertopf (12) befindet sich im Betriebszustand des Vergasers ein Bewegtbett aus kohlenstoffhaltigen Partikeln, das maximal bis zur Unterkante der Rührerwelle (14) reicht. Dieses Bewegtbett wird mittels Rührwerkzeugen (13), welche vorzugsweise mit T-förmigem Ende ausgeführt werden, durchmischt.
Die Rührwerkzeuge (13) sitzen auf einer Rührerwelle (14).
Der Vergasertopf (12) hat einen Boden (4), der mit Gasdurchlässigen Ausnehmungen versehen ist (somit perforiert ist), wobei die Ausnehmungen vorzugsweise kreisrunde Löcher sind.
Durch diesen Boden (4) gelangt im Betriebszustand des Vergasers ein Vergasungsmittel in den Vergasertopf (12) und damit in das Bewegtbett. Das Vergasungsmittel gelangt dabei über einen zentralen Schacht (6) zum perforierten Boden (4), wobei die Zuführung des Vergasungsmittels in diesen zentralen Schacht (6) durch die Zuführung (5) erfolgt.
Auf Höhe der Rührerwelle (14) befindet sich an beiden Seiten der Rührerwellendurchführung jeweils eine Fördereinrichtung (15), die vorzugsweise als Förderschnecke ausgeführt ist.

Im Bewegtbett des Vergasers erfolgt im Betriebszustand eine Umsetzung der kohlenstoffhaltigen Partikel durch Zugabe des Vergasungsmittels zu Synthesegas (CO, CH₄, H₂, CO₂, H₂O, und weiteren Bestandteilen). Die dabei freigesetzte Wärme sorgt für einen Temperaturanstieg im Bewegtbett. Innerhalb des Bewegtbettes bildet sich ein Temperaturprofil von unten nach oben aus. Direkt oberhalb des Bodens (4) stellt sich ein Temperaturprofil von sich ca. 300°C bis ca. 600°C ein, in der Mitte des Bewegtbettes ca. 500°C bis ca. 900°C, an der Oberfläche, direkt unterhalb der Rührerwelle (14) ca. 850°C bis ca. 1000°C.
In diesem Bewegtbett werden nicht nur die kohlenstoffhaltigen Partikel umgesetzt, sondern auch das Rohgas erwärmt und zum großen Teil in Synthesegas umgesetzt. Zusätzlich zur vertikalen thermischen Schichtung des Bewegtbettes stellt sich im Betriebszustand eine vertikale Verteilung bezüglich der Partikelgröße und -dichte ein. Diese vertikale Verteilung erfolgt durch die Durchmischung des Bewegtbettes mittels der Rührwerkzeuge (13). Weiterhin erfolgt diese auch durch die Teilfluidisation aufgrund der Durchströmung des Bewegtbettes durch die gasförmigen Bestandteile (Vergasungsmittel und entstehendes Synthesegas). In Folge dessen wird bewirkt, dass die Anzahl der kleinen und leichten Partikel nach oben hin ansteigt, während die Anzahl der großen und schweren Partikel nach unten hin zunimmt. Inerte Bewegtbettbestandteile, wie bspw. Asche und Schlacke, werden unter den gegebenen Bedingungen agglomerieren. Ab einer definierten Dichte und Größe der Schlackeagglomerate sinken diese auf den Boden (4) des Vergasertopfes (12) und werden schließlich mit Hilfe der Rührwerkzeuge (13) durch den perforierten Boden (4) ausgetragen. Unterhalb des Bodens ist ein Zentralschacht (6) angeordnet, unterhalb dessen sich ein Austragsschacht (7) befindet. An diesen schließt sich eine untere Austragsvorrichtung (8) an, welche vorzugsweise als Förderschnecke ausgeführt ist.
Der Austragsschacht (7) und die Austragsvorrichtung (8) sind als Siphon ausgeführt, in dem eine definierte Wassermenge steht und damit das System nach außen abschließt.
Die im Betriebszustand des Vergasers durch den Boden (4) gelangenden Schlackeagglomerate fallen durch den Zentraleschacht (6) und den Austragsschacht (7) in den wassergefüllten Siphon. Von dort werden sie mittels der Austragsvorrichtung (8) ausgetragen.

Aufgrund ihrer geringeren Dichte und Größe gelangen die kohlenstoffhaltigen Partikeln nicht durch den Boden (4) in den zentralen Schacht (6), sondern verbleiben im Bewegtbett und werden dort thermochemisch zu Synthesegas umgesetzt.

Der Bereich zwischen Bewegtbettoberfläche und der Innenseite eines Vergaserdoms (17), welcher vorzugsweise als nach unten offener hohler Kegelstumpf ausgeführt ist, definiert eine zentrale Strahlungszone.
Der Vergaserdom (17), der geschlossen und/oder perforiert ausgeführt werden kann, dient dazu, die Temperatur in der zentralen Strahlungszone durch Reflexion konstant zu halten. Dadurch stellen sich die Temperaturen in der zentralen Strahlungszone von ca. 750°C bis ca. 1000°C ein. Dabei wird das Rohgas und mitgerissene Partikel zum größten Teil zu Synthesegas umgesetzt.

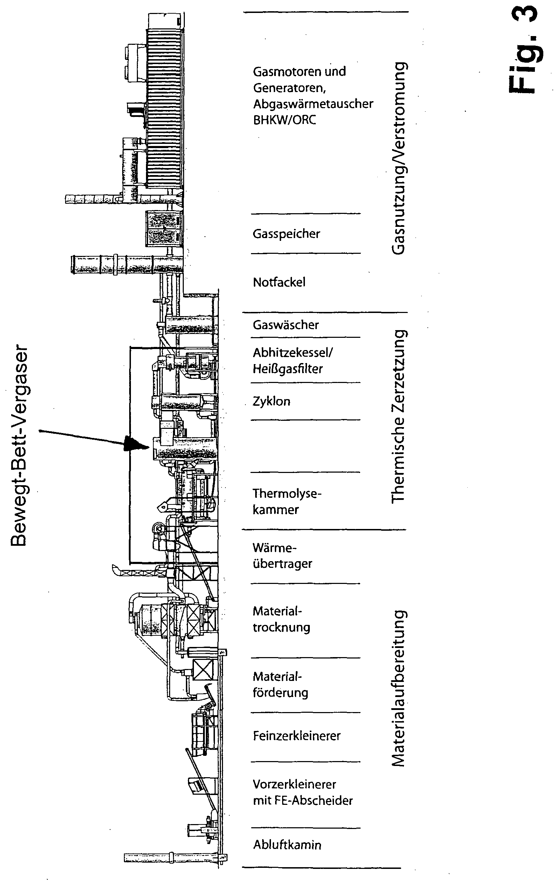

Gemäß der Erfindung strömt das Gas im Betriebszustand des Vergasers durch einen Ringspalt (18), welcher segmentiert und/oder offen ausgeführt ist, in den Vergaserfreiraum (16). Der Ringspalt (18) wird dabei durch den Vergaserdom (17) und den Vergasermantel (19) und/ oder den Vergasertopf (12) begrenzt.
Im Vergaserfreiraum (16) reagieren die bis dahin noch nicht umgesetzten kohlenstoffhaltigen Partikel und das nicht umgesetzte Rohgas fast vollständig zu Synthesegas.
Danach verlässt das Synthesegas den Vergaserfreiraum (16) am oberen Ende, über den Synthesegasaustrag (20).
Der zuvor stehend beschriebene Bewegt-Bett-Vergasers kann, wie in Fig. 3 dargestellt, an Stelle eines bisher bekannten Vergasers in eine bestehende oder neu zu errichtende Anordnung zur thermischen Zersetzung von Abprodukten und Abfallstoffen eingebaut werden.
Durch diesen Einbau werden gegenüber dem Stand der Technik die nach der Entgasung und / oder Vergasung der Abprodukte und Abfallstoffe verbleibenden Restprodukte weiter und nahezu vollständig umsetzt bzw. verwertet.

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

### Bezugszeichenliste

- 1: - Eintragvorrichtung
- 2: - Führungsrohr
- 3: - Stutzen
- 4: - Boden
- 5: - Zuführung
- 6: - Zentralschacht
- 7: - Austragsschacht
- 8: - Austragsvorrichtung
- 9: - Auflage
- 10: - Vergaserfußmantel
- 11: - Isolationsraum
- 12: - Vergasertopf
- 13: - Rührerwerkzeuge
- 14: - Rührerwelle
- 15: - Fördereinrichtung
- 16: - Vergaserfreiraum
- 17: - Vergaserdom
- 18: - Ringspalt
- 19: - Vergasermantel
- 20: - Synthesegasaustrag
- A: - Vergaserraum
- B: - Vergaserfuß

## Patentansprüche

1. Bewegt- Bett-Vergaser umfassend einen Vergaserraum (A) mit einem Vergaserfreiraum (16) und einen Vergaserfuß (B), wobei der Vergaserfreiraum (16) von einem Vergasermantel (19) umgeben ist sowie einen Synthesegasausgang (20) an seinem einen, verschlossenen Ende aufweist und über sein zweites, offenes Ende über den Vergasermantel (19) mit dem Vergaserfuß (B) in Verbindung steht, wobei der Vergaserfuß (B) in seinem Innenraum als ein Vergasertopf (12) ausgebildet ist, in den eine Eintragsvorrichtung (1) sowie mindestens eine Zuführung (5) hineinführen, der Vergasertopf (12) mit dem Vergasermantel (10) einen Isolationsraum (11) umschließt, durch den die Eintragsvorrichtung (1), die Zuführung (5), Zentralschacht (6) und die Rührerwelle (14) mit Fördereinrichtung (15) hindurch geführt sind, wobei der Vergaserfußmantel diese haltert, und im Vergaserraum (A) ein Vergaserdom (17) in der Art angeordnet ist, dass zwischen dem Vergaserdom (17) und dem Vergasermantel (19) und/oder dem Vergasertopf (12) ein Spalt (18) generiert ist, **dadurch gekennzeichnet, dass** der Vergasertopf (12) einen mit Ausnehmungen versehenen Boden (4) gegenüber dem Vergaserraum (A) aufweist, wobei der Boden in einen Zentralschacht (6) mündet, der Zentralschacht (6) in einen Austragsschacht (7) übergeht und Rührerwerkzeuge (13) über eine horizontale Rührerwelle (14) im Vergasertopf (12) drehbar gelagert sind, wobei die Rührerwelle (14) von einer Fördereinrichtung (15) umgeben ist.

2. Bewegt- Bett-Vergaser gemäß Anspruch 1, **dadurch gekennzeichnet, dass** der Vergaserraum (A) mit dem Vergaserfuß (B) gasdicht verbunden ist.

3. Bewegt- Bett-Vergaser gemäß Anspruch 1, **dadurch gekennzeichnet, dass** der Vergaserdom (17) zentrisch in dem Vergaserfreiraum (16) angeordnet ist.

4. Bewegt- Bett-Vergaser gemäß Anspruch 1, **dadurch gekennzeichnet, dass** der Vergaserdom (17) haubenförmig ausgestaltet ist.

5. Bewegt- Bett-Vergaser gemäß Anspruch 1, **dadurch gekennzeichnet, dass** der Spalt (18) ein Ringspalt ist und / oder segmentiert ist.

6. Bewegt- Bett-Vergaser gemäß Anspruch 1, **dadurch gekennzeichnet, dass** der Vergasertopf (12) in seinem Querschnitt rund oder oval ausgestaltet ist.

7. Bewegt- Bett-Vergaser gemäß Anspruch 1, **dadurch gekennzeichnet, dass** die Ausnehmungen im Boden siebförmig angeordnete Löcher sind.

8. Verfahren zum Betreiben eines Bewegt- Bett-Vergasers gemäß einem der voran stehenden Ansprüche 1 bis 7 in einer Anordnung zur thermischen Zersetzung von Abprodukten und Abfallstoffen bei dem der Vergasertopf (12) über die Eintragungsvorrichtung (1) mit Abprodukten oder Abfallstoffen befüllt wird, die vermittels der Rührerwerkzeuge (13) mit horizontaler Rührerwelle (14) gerührt und über die Ausnehmungen des Bodens (4) mit Vergasungsmittel begast werden, wobei eine Vergasung der Abprodukte oder Abfallstoffe in dem Vergaserfuß B und dem Vergaserraum (A) erfolgt, die Vergasungsprodukte durch den Ringspalt (18) gelangen und über den Synthesegasausgang (20) abgeleitet werden, wobei die bei der Vergasung gebildete Asche und Schlacke durch die Ausnehmungen des Bodens (4) über den Zentralschacht (6) und den Austragsschacht (7) vermittels der Austragsvorrichtung abgeführt werden.

9. Verfahren zum Betreiben eines Bewegt- Bett-Vergsers gemäß Anspruch 8 in einer Anordnung zur thermischen Zersetzung von Abprodukten und Abfallstoffen bei dem die Fördereinrichtung (15) als Überlauf für Abprodukte oder Abfallstoffe dient.

10. Verfahren zum Betreiben eines Bewegt- Bett-Vergasers gemäß Anspruch 8 oder 9 in einer Anordnung zur thermischen Zersetzung von Abprodukten und Abfallstoffen bei dem der Vergaserdom (17) der Wärmerückführung durch Reflexion dient.

## Claims

1. A moving bed carburettor comprising a carburettor compartment (A) with a carburettor free space (16) and a carburettor base (B), wherein the carburettor free space (16) is surrounded by a carburettor jacket (19) and is provided with a synthesis gas outlet (20) at its first, closed end and via its second open end it is connected to the carburettor base (B) by the carburettor jacket (19), wherein the interior of the carburettor jacket (19) is designed as a carburettor pot (12) into which a feed device (1) and at least one inlet (5) lead, the carburettor pot (12) encloses with the carburettor jacket (10) an insulation space (11) through which the feed device (1), the inlet (5), the central shaft (6) and the agitator shaft (14) with conveying unit (15) are guided, wherein the carburettor base jacket holds these components, and a carburettor dome (17) is arranged in the carburettor compartment (A) in such a way that a gap (18) is created between the carburettor dome (17) and the carburettor jacket (19) and/or the carburettor pot (12), **characterized in that** the carburettor pot (12) has a bottom (4) provided with recesses opposite the carburettor compartment (A), wherein the bottom opens into a central shaft (6), the central shaft (6) passes into a discharge shaft (7), and agitator tools (13) are pivoted in the carburettor pot (12) via a horizontal agitator shaft (14), wherein the agitator shaft (14) is surrounded by a conveyor unit (15).

2. The moving bed carburettor according to claim 1, **characterized in that** the carburettor compartment (A) is connected to the carburettor base (B) in a gastight manner.

3. The moving bed carburettor according to claim 1, **characterized in that** the carburettor dome (17) is arranged centrically in the carburettor free space (16).

4. The moving bed carburettor according to claim 1, **characterized in that** the carburettor dome (17) has a hood-like shape.

5. The moving bed carburettor according to claim 1, **characterized in that** the gap (18) is an annular gap and/or has a segmented design.

6. The moving bed carburettor according to claim 1, **characterized in that** the carburettor pot (12) has a round or oval cross-section.

7. The moving bed carburettor according to claim 1, **characterized in that** the recesses in the bottom are holes which are arranged in a sieve pattern.

8. A method for operating a moving bed carburettor according to one of the preceding claims 1 to 7 in an arrangement for the thermal decomposition of waste products and waste materials, in which via the feed device (1) the carburettor pot (12) is filled with waste products or waste materials, which are agitated by means of the agitator tools (13) with the horizontal agitator shaft (14) and are exposed to gas by a gasification agent supplied through the recesses of the bottom (4), wherein the waste products or waste materials are exposed to gas in the carburettor base (B) and the carburettor compartment (A), the gasification products pass through the annular gap (18) and are discharged via the synthesis gas outlet (20), wherein the ash and slag produced during the gasification process are discharged by means of the discharge device (8) through the recesses of the bottom (4) via the central shaft (6) and the discharge shaft (7).

9. The method for operating a moving bed carburettor according to claim 8 in an arrangement for the thermal decomposition of waste products and waste materials in which the conveyer unit (15) functions as an overflow for waste products and waste materials.

10. The method for operating a moving bed carburettor according to claim 8 or 9 in an arrangement for the thermal decomposition of waste products and waste materials in which the carburettor dome (17) is used for heat recovery by reflection.

## Revendications

1. Gazéificateur à lit mobile contenant une chambre du gazéificateur (A) avec un espace libre du gazéificateur (16) et une base du gazéificateur (B), ledit espace libre du gazéificateur (16) étant entouré d'une enveloppe de gazéificateur (19) et possédant une sortie du gaz de synthèse (20) à sa première extrémité fermée et étant relié à la base du gazéificateur (B) par sa deuxième extrémité ouverte par l'intermédiaire de l'enveloppe de gazéificateur (19), ladite base du gazéificateur (B) étant conçu à l'intérieur comme une cuve du gazéificateur (12) dans laquelle débouchent un dispositif d'alimentation (1) et au moins une alimentation (5), ladite cuve du gazéificateur (12) avec l'enveloppe de gazéificateur (19) entourant un espace d'isolation (11) à travers lequel sont guidés le dispositif d'alimentation (1), l'alimentation (5), la cheminée centrale (6) et l'arbre d'agitation (14) avec le système de transport (15), l'enveloppe de la base du gazéificateur les recevant, et un dôme de gazéificateur (17) étant disposé dans la chambre du gazéificateur (A) de telle façon que'une interstice (18) est générée entre le dôme de gazéificateur (17) et l'enveloppe de gazéificateur (19) et/ou la cuve du gazéificateur (12), est **caractérisé en ce que** la cuve du gazéificateur (12) est munie d'un fond avec des évidements (4) à l'opposé de la chambre du gazéificateur (A), ledit fond débouchant dans une cheminée centrale (6) et la cheminée centrale (6) débouchant dans une cheminée de décharge (7) et les outils d'agitation (13) étant montés tournant dans la cuve du gazéificateur (12) au moyen d'un arbre d'agitation horizontal (14), et ledit arbre d'agitation (14) étant entouré par un système de transport (15).

2. Gazéificateur à lit mobile selon la revendication 1 est **caractérisé en ce que** la chambre du gazéificateur (A) est reliée à la base du gazéificateur (B) de manière étanche aux gaz.

3. Gazéificateur à lit mobile selon la revendication 1 est **caractérisé en ce que** le dôme du gazéificateur (17) est disposé de manière centrale dans l'espace libre du gazéificateur (16).

4. Gazéificateur à lit mobile selon la revendication 1 est **caractérisé en ce que** le dôme du gazéificateur (17) est en forme d'un capot.

5. Gazéificateur à lit mobile selon la revendication 1 est **caractérisé en ce que** l'interstice (18) est un interstice annulaire et/ou segmenté.

6. Gazéificateur à lit mobile selon la revendication 1 est **caractérisé en ce que** la cuve du gazéificateur (12) est de section ronde ou ovale.

7. Gazéificateur à lit mobile selon la revendication 1 est **caractérisé en ce que** les évidements dans le fond sont des trous en forme de tamis.

8. Procédé pour le service d'un gazéificateur à lit mobile suivant une ou plusieurs des revendications précédentes 1 à 7 dans un dispositif pour la décomposition thermique des déchets et des matières résiduelles, dans lequel la cuve du gazéificateur (12) est rempli de déchets ou de matières résiduelles par le dispositif d'alimentation (1), qui sont agités au moyen d'outils d'agitation (13) avec un arbre d'agitation horizontal (14) et gazés avec un agent de gazéification par les évidements dans le fond (4), et la gazéification des déchets ou des matières résiduelles s'effectue dans la base du gazéificateur (B) et dans la chambre du gazéificateur (A), les produits de gazéification passent par l'interstice annulaire (18) et sont évacués par la sortie du gaz de synthèse (20), et les cendres et les mâchefers formées lors de la gazéification sont évacuées par les évidements dans le fond (4) par la cheminée centrale (6) et la cheminée de décharge (7) au moyen du dispositif de décharge.

9. Procédé pour le service d'un gazéificateur à lit mobile selon la revendication 8 dans un dispositif pour la décomposition thermique des déchets et des matières résiduelles, dans lequel le système de transport (15) sert de déversoir à trop plein pour les déchets ou les matières résiduelles.

10. Procédé pour le service d'un gazéificateur à lit mobile selon les revendications 8 ou 9 dans un dispositif pour la décomposition thermique des déchets et des matières résiduelles, dans lequel le dôme du gazéificateur (17) sert de récupération de chaleur par réflexion.
